## Europäisches Patentamt

## European Patent Office

## Office européen des brevets

(19)

(11) Numéro de publication: **0 235 087**

**B1**

(12)

# FASCICULE DE BREVET EUROPÉEN

(45) Date de publication du fascicule du brevet:
**25.10.89**

(21) Numéro de dépôt: **87810095.7**

(22) Date de dépôt: **17.02.87**

(51) Int. Cl.⁴: **B 29 C 67/14,** A 63 C 5/12

(54) Elément de renforcement destiné à être incorporé à une résine et utilisation de cet élément.

(30) Priorité: **21.02.86 CH 709/86**

(43) Date de publication de la demande:
**02.09.87 Bulletin 87/36**

(45) Mention de la délivrance du brevet:
**25.10.89 Bulletin 89/43**

(84) Etats contractants désignés:
**AT BE CH DE ES FR GB IT LI NL SE**

(56) Documents cité:
**BE-A-663 946**
**DE-A-2 713 606**
**FR-A-2 379 376**
**FR-A-2 437 225**
**FR-A-2 437 530**
**GB-A-2 028 715**
**GB-A-2 114 056**
**US-A-3 704 877**

(73) Titulaire: **Atomic Skifabrik Alois Rohrmoser,
Markt 44, A-5602 Wagrain (AT)**

(72) Inventeur: **Cholat-Serpoud, Gérard, Sillans, F-38590
St-Etienne de St.-Geoirs (FR)**
Inventeur: **Scherubl, Franz, Schwemmberg 117,
A-5550 Radstadt (AT)**

(74) Mandataire: **Dousse, Blasco, 7, route de Drize, CH-
1227 Carouge/Genève (CH)**

## Description

La présente invention se rapporte à un élément de renforcement destiné à être incorporé à une résine, se présentant sous la forme d'une nappe de filaments de renforcement orientés selon au moins une direction, ces filaments étant constitués par un matériau présentant une résistance à la traction > 1,5 GPa avec une résistance spécifique > $0,8 \cdot 10^5$ m et un module d'élasticité > 50 GPa avec un module spécifique > $30 \cdot 10^5$ m, ainsi qu'à une utilisation de cet élément.

On utilise depuis longtemps, dans les matériaux stratifiés des couches d'élastomères viscoélastiques à haut coefficient d'amortissement, pour absorber l'énergie de vibration et la transformer en échauffement. L'incorporation de telles couches dans une résine n'est pas toujours facile à réaliser. Elle pose des problèmes d'adhérence notamment. En outre, lorsqu'il s'agit de réaliser des stratifiés de section variable qui ne sont pas réalisables en continu, chaque couche supplémentaire suppose une mise en place correcte dans un moule, c'est-à-dire une opération supplémentaire, qui doit être effectuée avec soin, ce qui suppose à la fois une augmentation du coût et une source de défauts en cas de mise en place incorrecte dans le moule.

Il existe également nombre d'organes en résine moulée, renforcée par des filaments à haute résistance dont la section est plus ou moins circulaire et dans laquelle il est encore plus difficile d'incorporer une feuille d'élastomère visco-élastique pour amortir les vibrations. La formation d'éléments tubulaires d'élastomère visco-élastique est souvent difficile à réaliser notamment lorsque la section est appelée à varier.

Le but de la présente invention est de remédier, au moins en partie, aux inconvénients susmentionnés en permettant la simplification de la fabrication des stratifiés à base de résines tout en conférant à ces stratifiés une résistance mécanique élevée ainsi qu'un bon amortissement des vibrations.

A cet effet, la présente invention a pour objet un élément de renforcement selon la revendication 1, ainsi qu'une utilisation de cet élément de renforcement selon la revendication 9.

Les avantages de cette invention résident dans le fait que le même élément comporte à la fois des filaments de renforcement et des filaments destinés à amortir les vibrations. Le fait de réunir dans l'élément de renforcement non seulement des propriétés de résistance mécanique avec module d'élasticité élevé, mais également un effet d'amortissement des vibrations, entraîne une réduction du nombre de composants du matériau stratifié et donc de son coût. Cette invention permet également d'incorporer un élastomère amortisseur de vibrations dans des corps tubulaires ou de section circulaire dans lesquels l'incorporation de tels matériaux élastomères n'avait encore pas trouvé de solution satisfaisante. La solution proposée ici facilite également les problèmes d'adhérence entre l'élastomère et la résine.

Le dessin annexé illustre, schématiquement et à titre d'exemple, diverses formes d'exécution de l'élément de renforcement, objet de la présente invention.

Les figures 1 à 4 sont des vues en perspective de quatre variantes de l'élément de renforcement selon l'invention.

La figure 5 est une vue en perspective très agrandie d'un détail de cet élément de renforcement.

Les figures 6 et 7 sont des vues en coupe transversale de deux variantes d'un ski renforcé par cet élément.

L'élément de renforcement, objet de cette invention, est notamment réalisé par tissage ou pour couture pour former une nappe de filaments de renforcement destinée à être incorporée à une résine. Les filaments utilisés sont des filaments dont la résistance à la traction est > 1,5 GPa et la résistance spécifique, qui est la résistance divisée par le poids spécifique des filaments, est > 0,8 ($10^5$ m). Le module d'élasticité du matériau de ces filaments est > 50 GPa avec un module spécifique qui est divisé par le poids spécifique > 30 ($10^5$ m). A titre d'exemple, les filaments entrant dans la catégorie ainsi définie sont tous les filaments utilisés habituellement pour le renforcement des résines, c'est-à-dire, par exemple, les filaments de verre, de carbone, de kevlar, d'aramide ou d'autres matériaux équivalents. Les modes de formation des nappes par tissage ou par couture peuvent être variés.

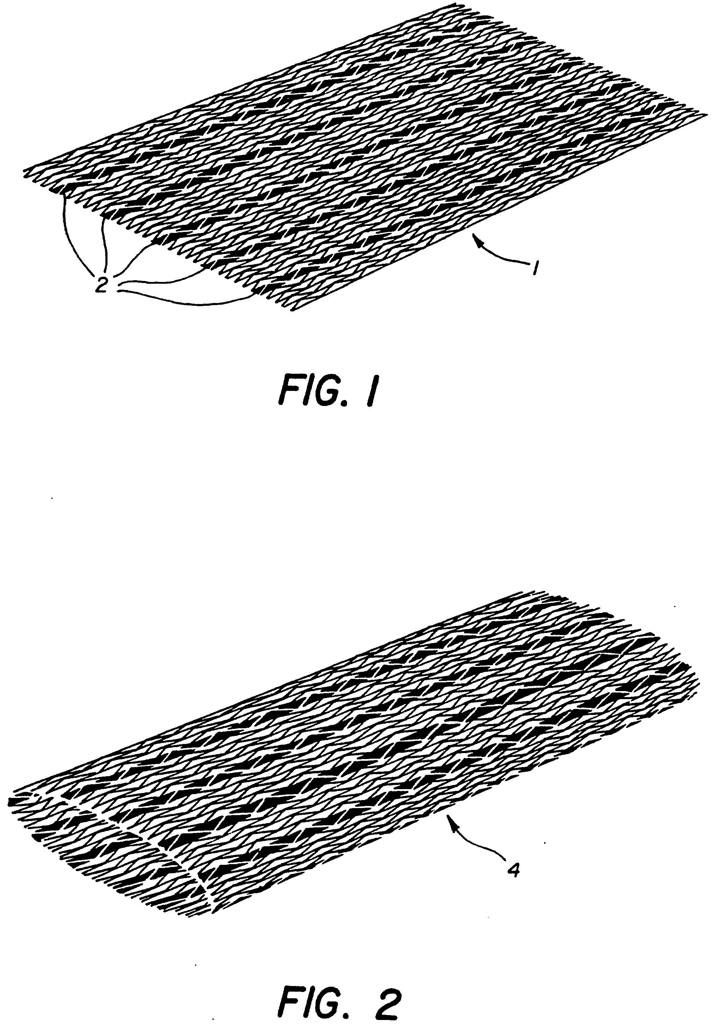

Quelques exemples de structures d'éléments de renforcement réalisés selon l'invention sont illustrés par les figures. La figure 1 illustre un élément de renforcement en feuille 1 obtenu par tissage ou par couture sur une feuille de support. Les filaments d'élastomère visco-élastique 2 sont illustrés sous la forme de rubans étroits, de sorte que le terme de filaments utilisé ici, ne doit pas être entendu exclusivement comme étant un produit obtenu par extrusion à travers une buse, mais comme un produit dont la section circulaire ou rectangulaire est très faible par rapport à sa longueur.

Dans les exemples donnés ici, de préférence, les filaments d'élastomère visco-élastique sont obtenus par découpage de plusieurs rubans très minces dans une bande d'élastomère visco-élastique plus large. On sait en effet que pour obtenir des propriétés d'amortissement élevées, on associe en général des couches d'élastomères visco-élastiques présentant des modules d'élasticité différents. Pour cette raison, ces élastomères visco-élastiques stratifiés ne sont réalisés qu'en feuilles ou en bandes et non sous forme de filaments. Ceci explique pourquoi, dans le cas de la présente invention et afin de pouvoir utiliser ce type de matériau de préférence, en raison de son pouvoir d'amortissement élevé, les filaments sont réalisés par découpage de rubans étroits à partir d'un matériau en bande.

La confection de tissus de renforcement auxquels de tels filaments d'élastomère sont incorporés, en vue de leur conférer des propriétés d'amortissement des vibrations de la structure composite dans laquelle ils sont noyés, pose un problème pratique dû à l'importante différence d'élasticité entre les filaments entrant dans la composition de ce tissu. En effet, pendant l'opération de tissage, ces filaments d'élastomère soumis à une traction s'étirent contrairement aux autres filaments, de verre, de carbone, d'aramide, de kevlar etc. Une fois le tissu terminé, les filaments d'élastomère reviennent à leur longueur initiale, de sorte que les autres filaments deviennent alors trop longs et ne permettent donc plus de renforcer la résine dans laquelle le tissu est noyé.

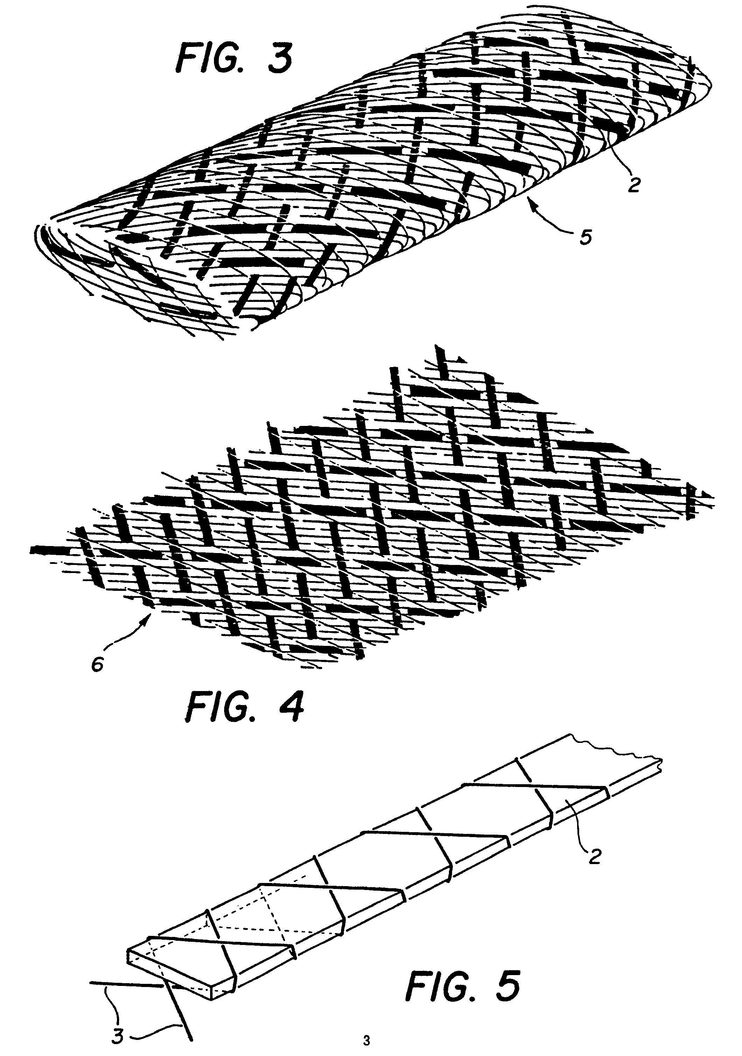

Pour éviter que ce défaut ne se produise, on peut alimenter les filaments d'élastomère positivement à l'aide d'un fournisseur de fil entraîné à la même vitesse que celle d'avance des autres filaments, de manière à ne pas les allonger. Une autre solution consiste à guiper le filament d'élastomère 2 avec une tresse de filaments 3 en un matériau non élastomère (fig. 5). Par ce guipage, lorsque le filament est tiré, les filaments de la tresse se resserrent sur le filament d'élastomère et l'empêchent ainsi de s'allonger. Une fois noyée dans la résine, cette tresse ne joue plus de rôle, les efforts de cisaillement étant alors transmis directement aux filaments d'élastomère visco-élastique.

La variante illustrée par la fig. 2 montre un élément de renforcement tubulaire tissé 4, dans lequel une partie des filaments de chaîne sont constitués par les filaments d'élastomère visco-élastique 2. Un tel élément de renforcement est utilisable dans la fabrication de toutes sortes d'éléments allongés réalisés en résines renforcées, tels que les skis, les manches de raquettes de tennis, les clubs de golf, les fourches de bicyclettes, pour ne citer que quelques exemples non limitatifs dans lesquels le renforcement et l'amortissement des vibrations ont une importance particulière.

Alors que l'amortissement est essentiellement orienté dans le sens longitudinal, dans l'élément tubulaire illustré par la fig. 2, celui, 5, illustré par la fig. 3, est tissé en diagonale et les filaments d'élastomère visco-élastique 2 sont répartis dans le sens de la trame aussi bien que dans celui de la chaîne.

La variante illustrée par la fig. 4 se rapporte à un tissu réalisé sous forme d'une feuille 6 dans laquelle les filaments de chaîne et de trame sont en diagonale, les filaments d'élastomère 2 étant disposés selon ces deux directions également. Un tel tissu est obtenu par couture des filaments sur une feuille de substrat, cette feuille pouvant être un simple film de matière plastique, par exemple de polyéthylène, ou une feuille de non-tissé.

Le choix de ces différentes variantes dépend essentiellement de l'application à laquelle l'élément de renforcement est destiné. En outre, ces variantes ne sont pas limitatives et d'autres peuvent être imaginées. C'est ainsi que l'on pourrait avoir des filaments de renforcement et d'amortissement orientés selon une seule direction et liés transversalement ou non, simplement par un filament de trame, sans serrer les brins parallèles de ce filament les uns contre les autres.

Compte tenu de sa forme de feuille simple ou tubulaire, l'élément de renforcement trouve des applications dans tous les types de matériaux stratifiés à base de résines connus jusqu'ici. Il permet en particulier d'améliorer les propriétés de corps en résine renforcée dans lesquels il n'était pas possible, ou au moins difficile et donc onéreux, d'incorporer un matériau élastomère visco-élastique d'amortissement. Dans le cas d'autres produits stratifiés dans lesquels on a déjà eu recours à des couches de tels matériaux d'amortissement, le coût de production est réduit et les problèmes d'adhérence sont simplifiés.

Pour réaliser les filaments d'élastomère visco-élastique utilisés dans le cadre de cette invention, on peut avoir recours à tous les élastomères visco-élastiques à fort amortissement disponibles sur le marché. Dans les exemples entrant dans le cadre de cette invention, l'élastomère utilisé est un produit de Vibrachoc à Saint-Cloud (France), du type VAM-0,4 (ou VAM-0,4 G2) qui se présente en bandes de 0,4 mm d'épaisseur, qui sont ensuite découpées en filaments ou rubans de 0,5 mm à quelques mm de largeur. Bien entendu, d'autres matériaux similaires peuvent être utilisés. Il est également possible d'utiliser des filaments extrudés sans passer par l'opération de découpage au cas où de tels filaments sont disponibles pour ce type de matériau visco-élastique à fort amortissement.

Comme on l'a précisé ci-dessus, l'effet d'amortissement des filaments d'élastomères à section rectangulaire est dû aux efforts de cisaillement induits dans l'épaisseur de la bande dans laquelle ils sont découpés. En effet, comme on l'a dit, l'amortissement est accru par le fait que le matériau élastomère visco-élastique a une structure stratifiée formée d'un mélange d'élastomères différents. Les filaments qui sont, en fait, des rubans ont donc des propriétés d'amortissement anisotropes, d'où l'importance de placer le maximum de ces filaments avec leur épaisseur parallèle au plan de flexion de l'organe à renforcer au cas où cet organe a lui-même une section rectangulaire qui définit un plan de flexion préférentiel. Dans le cas d'une section circulaire, ces filaments devront être orientés avec leur largeur tangente par rapport à un arc de cercle centré sur l'axe de cette section.

Il ressort de ces explications que, pour un matériau élastomère visco-élastique donné, d'épaisseur déterminée, l'effet d'amortissement obtenu est fonction de la largeur totale de matériau incorporé à la résine et orienté avec l'épaisseur parallèle au(x) plan(s) de flexion.

Etant donné que, dans le cas d'une poutre de section rectangulaire fléchie dans le plan de son épaisseur, le gradient compression/traction résultant de la flexion est linéaire à travers la section, les filaments d'élastomère visco-élastique peuvent être disposés n'importe où dans la structure, puisque le cisaillement résulte de la différence de contrainte entre les deux faces larges de la section rectangulaire des filaments, pour autant que ces faces larges soient orientées parallèlement à celles de la poutre en cas de flexion dans le plan de l'épaisseur. L'amortissement des vibrations transversales nécessite de disposer alors une certaine proportion de filaments d'élastomères dans le plan de l'épaisseur. Dans le cas des exemples illustrés par les figures 3 et 4, l'orientation oblique des filaments élastomère visco-élastique favorise en outre l'amortissement des vibrations de torsion.

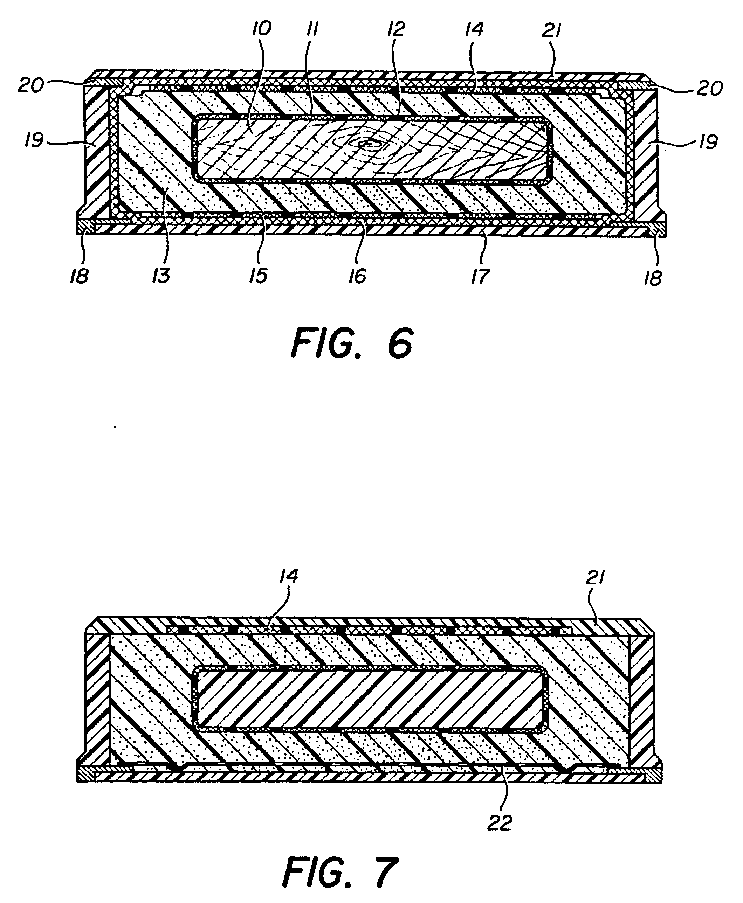

Les figures 6 et 7 illustrent une application particulière au ski de l'élément de renforcement selon l'invention.

Dans la structure donnée ici à titre d'exemple, un noyau 10 est placé au centre de la structure. Ce noyau peut être en bois, en mousse de polyéthylène ou de polyuréthane, en une structure en nid d'abeille formée en un métal léger tel qu'en alliage d'aluminium, sous forme d'une rangée de tubes en matière plastique venus d'extrusion avec des nervures de liaison longitudinales. D'autres structures légères peuvent encore être imaginées pour ce noyau 10, celles qui sont énumérées ci-dessus n'étant pas limitatives.

Ce noyau 10 est entouré d'une gaine de renforcement 11, constituée d'un tissu tubulaire de filaments de renforcement auxquels sont associés des filaments d'élastomère visco-élastique 12, conformément à l'élément de renforcement objet de la présente invention. Ce tissu est noyé dans une résine 13 du type époxy, polyuréthane (sous forme de mousse ou non) polyester notamment. Cette gaine de renforcement 11 prenant la forme de la section rectangulaire du noyau 10, constitue un élément qui accroît la rigidité aussi bien en flexion qu'en torsion.

Deux autres nappes 14 et 15 de filaments de renforcement selon l'invention sont noyées dans les parties supérieure, respectivement inférieure de la résine 13. Ceci permet d'accroître l'effet de renforcement ainsi que le volume de matériau visco-élastique qui est proportionnel à l'effet d'amortissement obtenu. Le tout est enveloppé par un autre matériau textile 16 de renforcement.

Le reste de la structure est classique, elle comporte une semelle 17 en polyéthylène, bordée par des carres d'acier 18, lesquelles sont surmontées d'éléments de chant 19. A la partie supérieure on retrouve deux carres 20 et un élément de protection 21, qui, comme les éléments de chant 19, peut être en ABS ou en un autre matériau de protection équivalent.

La variante de la fig. 7 diffère de celle de la fig. 6 essentiellement par le fait que la partie inférieure du ski est renforcée par une lame d'acier à ressort 22 qui remplace la nappe de textile de renforcement 15 et par le fait que la nappe de textile 16 enveloppant la résine est supprimée. La nappe supérieure 14 de textile de renforcement selon l'invention est logée dans un dégagement ménagé sous l'élément de protection 21.

## Revendications

1. Elément de renforcement destiné à être incorporé à une résine, se présentant sous la forme d'une nappe (1, 4, 5, 6) de filaments de renforcement orientés selon au moins une direction, ces filaments étant constitués par un matériau présentant une résistance à la traction > 1,5 GPa avec une résistance spécifique > 0,8 · $10^5$m et un module d'élasticité > 50 GPa avec un module spécifique > 30 · $10^5$m, caractérisé par le fait que des filaments d'un élastomère visco-élastique (2) sont incorporés selon au moins une direction à ladite nappe de filaments de renforcement.

2. Elément selon la revendication 1, caractérisé par le fait que lesdits filaments d'élastomère (2) ont une section rectangulaire, avec leur largeur disposée parallèlement à ladite nappe de filaments.

3. Elément selon la revendication 1, caractérisé par le fait que lesdits filaments d'élastomère (2) sont guipés par une tresse de filaments non élastomère (3) avant d'être incorporés à ladite nappe.

4. Elément selon la revendication 1, caractérisé par le fait que la nappe est tissée.

5. Elément selon la revendication 1, caractérisé par le fait que la nappe est cousue sur une feuille de support.

6. Elément selon la revendication 1, caractérisé par le fait que ladite nappe (4, 5) est sous forme tubulaire.

7. Elément selon la revendication 4, caractérisé par le fait que les filaments d'élastomère (2) sont incorporés dans la chaîne.

8. Elément selon l'une des revendications 5 et 6, caractérisé par le fait que lesdits filaments (2) sont orientés selon deux directions opposées obliques par rapport au sens longitudinal de la nappe (5, 6).

9. Utilisation de l'élément de renforcement (11, 14, 15) selon l'une des revendications précédentes dans une structure de ski.

## Claims

1. Reinforcement member intended to being incorporated into a resin, having the form of a layer (1, 4, 5, 6) of reinforcing filaments oriented according to at least one direction, said filaments consisting of a material with a tensile strength > 1 · 5 GPa and a specific strength > 0, 8 · $10^5$m and with a modulus of elasticity > 50 GPa and a specific modulus > 30 · 10⁵m, characterized in that visco-elastic elastomeric filaments (2) are incorporated in said filament layer along at least one direction.

2. Member according to claim 1, characterized in that said elastomeric filaments (2) have a rectangular cross-section, the breadth thereof being disposed in parallel relation with said filament layer.

3. Member according to claim 1, characterized in that said elastomeric filaments (2) are wrapped in a braid of non-elastomeric filaments (3) before incorporation into said layer.

4. Member according to claim 1, characterized in that the layer is a woven fabric.

5. Member according to claim 1, characterized in that the layer is sewn to a supporting sheet.

6. Member according to claim 1, characterized in that said layer (4, 5) is in tube form.

7. Member according to claim 4, characterized in that the elastomer filaments (2) are incorporated in the warp.

8. Member according to claims 5 and 6 characterized in that said filaments (2) are stretched along two opposed directions oriented slantwise relatively to the longitudinal direction of the layer (5, 6).

9. The use of the reinforcing member (11, 14, 15) according to one of the previous claims in a ski structure.

**Patentansprüche**

1. Verstärkungselement zur Einbettung in ein Harz in Form eines Tuches (1, 4, 5, 6) aus Verstärkungsfasern, die in wenigstens eine Richtung ausgerichtet sind, wobei diese Fasern aus einem Material gebildet sind, das einen Zugwiderstand > 1,5 GPa mit einem spezifischen Widerstand > 0,8 x 10⁵m und einen Elastizitätsmodul > 50 GPa mit einem spezifischen Modul > 30 x 10⁵m hat, dadurch gekennzeichnet, daß die Fasern eines viskoelastischen Elastomers (2) in wenigstens einer Richtung in das Tuch der Verstärkungsfasern eingebracht sind.

2. Element nach Anspruch 1, dadurch gekennzeichnet, daß die Fasern des Elastomers (2) einen rechteckigen Querschnitt haben, wobei ihre Breite parallel zum Tuch der Fasern angeordnet ist.

3. Element nach Anspruch 1, dadurch gekennzeichnet, daß die Fasern des Elastomers (2) von einer Tresse aus Fasern eines Nichtelastomers (3) umgeben werden, bevor sie in das Tuch eingebracht werden.

4. Element nach Anspruch 1, dadurch gekennzeichnet, daß das Tuch gewoben ist.

5. Element nach Anspruch 1, dadurch gekennzeichnet, daß das Tuch auf ein Trägerblatt aufgenäht ist.

6. Element nach Anspruch 1, dadurch gekennzeichnet, daß das Tuch (4, 5) Rohrform hat.

7. Element nach Anspruch 4, dadurch gekennzeichnet, daß die Fasern des Elastomers (2) in die Kette eingebracht sind.

8. Element nach einem der Ansprüche 5 und 6, dadurch gekennzeichnet, daß die Fasern (2) in zwei entgegengesetzten Richtungen ausgerichtet sind, die schräg zur Längsrichtung des Tuches (5, 6) sind.

9. Verwendung des Verstärkungselementes (11, 14, 15) gemäß einem der vorhergehenden Ansprüche bei einer Skikonstruktion.

FIG. 1

FIG. 2

*FIG. 3*

5

2

6

*FIG. 4*

2

3

*FIG. 5*

3

FIG. 6

FIG. 7